# EUROPEAN PATENT APPLICATION

(11) **EP 2 426 666 A2**
(43) Date of publication of application: **07.03.2012**
(21) Application number: 11174848.9
(22) Date of filing: 21.07.2011
(51) Int. Cl.: G11B 27/10

(54) **Media playing apparatus and media processing method**

(30) Priority: 17.02.2011 US 29149; 02.09.2010 CN 201010269698
(71) Applicant: Sony Ericsson Mobile Communications AB, 221 88 Lund (SE)
(72) Inventor: Ye Bizhong, Beijing (CN); Cai Wenbo, Beijing (CN)
(74) Representative: Ström & Gulliksson AB

(57) **Abstract**

The present invention relates to a media playing apparatus and a media processing method. The media playing apparatus comprising a playing unit that plays media files containing tags, wherein the media playing apparatus further comprising: a recording unit that records play events of the media files by the playing unit; an extracting unit that extracts the tags of the media files played by the playing unit; and an acquiring unit that acquires a media file playing frequency or a media file amount corresponding to each tag of a predetermined tag type among the extracted tags according to the play events recorded by the recording unit. The embodiment of the present invention can acquire more media files or other information by using the media file playing frequency or the media file amount corresponding to each tag.

## Description

### Field of the Invention

The present application relates to media playing, and particularly, to a media playing apparatus and a media processing method.

### Description of the Related Art

Many electronic apparatuses (e.g., mobile phone, computer, Personal Digital Assistant (PDA), MP3 player and MP4 player, etc.) have media playing function, so that people can conveniently enjoy music while being at leisure or working for relaxing. Thus, media such as music and electronic apparatuses with the media playing function have become indispensable in people's lives.

In order that the user can understand and manage the listened media file conveniently, the media file is usually provided with a file tag. The file tag refers to information such as media title (e.g., song name), artist (e.g., singer), album, genre, production year, etc. For example, the head or end of the media file of MP3 format is usually provided with a tag of ID3 format, which includes tag types such as title, artist, album, genre, etc. In addition, a media file of Ogg format is usually provided with a tag of Vorbis format. Media files of APE and MPC formats are usually provided with tags of APE format. According to the tag of the media file, the user can acquire related information (e.g., title, artist, album, genre, etc.) of the corresponding media file when the user listens to his favorite music, so as to download other songs having the same artist, album or genre from a website according to the acquired information. However, it is difficult in actual operations for the user to comprehensively acquire his favorite media. Furthermore, although the media file has a tag so that the user can understand and manage the media file according to the tag, improvements still need to be made on how to enable the user to know or to understand his favor of or interest in music more clearly and comprehensively by using the tag information, so as to acquire more suitable music further easily and make friends who have the same favor.

### Summary of the invention

The present invention is proposed in view of the above problems in the prior art. The present invention is related to a media playing apparatus and a media processing method that overcomes at least one disadvantages due to the limitation of the prior art, and provides at least one beneficial selection.

According to one aspect of the present invention, a media playing apparatus is provided, including a playing unit that plays media files containing tags, wherein the media playing apparatus further includes: a recording unit that records play events of the media files by the playing unit; an extracting unit that extracts the tags of the media files played by the playing unit; and an acquiring unit that acquires a media file playing frequency or a media file amount corresponding to each tag of a predetermined tag type among the extracted tags according to the play events recorded by the recording unit.

According to another aspect of the present invention, the media files are music files, and the predetermined tag type includes at least one of music title, author, composer, singer, executant, album, genre and production year.

According to another aspect of the present invention, the media playing apparatus further includes: a selecting unit that ranks the tags, according to a descending order of the media file playing frequency or media file amount corresponding to each tag of the predetermined tag type, so as to obtain a tag sequence, and selects at least one type of tag from the start of the tag sequence.

According to another aspect of the present invention, the media playing apparatus further includes: a media file requiring unit that transmits the selected tag to a server, so as to require or to request media files having the selected tag from the server.

According to another aspect of the present invention, the media playing apparatus further includes: a searching unit that introduces the selected tag into a search engine, so as to search media files having the selected tag.

According to another aspect of the present invention, the media playing apparatus further includes: an issuing unit that transmits the selected tag and/or a title of a played media file corresponding to the selected tag, to a destination address.

According to an aspect of the present invention more media files or other information can be acquired by using the media file playing frequency or media file amount corresponding to each tag.

According to another aspect of the present invention, the media playing apparatus further includes: an event prompting unit that monitors a given event, and prompts the given event by playing a media through the playing unit; an unprocessed event recording unit that records a frequency of continuously not processing the given event; and a genre modifying unit that modifies a media played for prompting the given event of a next time into a media having a different playing genre, based on the frequency recorded by the unprocessed event recording unit.

According to another aspect of the present invention, the format of the media played for prompting the given event is audio.

According to another aspect of the present invention, the given event comprises at least one of incoming call, reception of short message, reception of multimedia message, calendar task reminder and alarm reminder.

According to another aspect of the present invention, the media playing apparatus further includes: a presetting unit that presets media or media playing genres corresponding to different frequencies of not processing the given event.

According to another aspect of the present invention, a media processing includes: recording play events of media files when the media files containing file tags is played; extracting the tags of the played media files; and acquiring a media file playing frequency or a media file amount corresponding to each tag of a predetermined tag type among the extracted tags according to the recorded play events.

According to another aspect of the present invention, the method further includes: ranking the tags, according to a descending order of the media file playing frequency or media file amount corresponding to each tag of the predetermined tag type, so as to obtain a tag sequence, and selecting at least one type of tag from the start of the tag sequence.

According to another aspect of the present invention, the method further include: transmitting the selected tag to a server, so as to require or to acquire media files having the selected tag from the server.

According to another aspect of the present invention, the method further includes: introducing the selected tag into a search engine, so as to search media files having the selected tag.

According to another aspect of the present invention, the method further includes: transmitting the selected tag and/or a title of a played media file corresponding to the selected tag, to a destination address.

According to another aspect of the present invention, the method further includes: monitoring a given event, and prompting the given event by playing a media; recording a frequency of continuously not processing the given event; and modifying a media played for prompting the given event of a next time into a media having a different playing genre based on the recorded frequency.

According to another aspect of the present invention, the format of the media played for prompting the given event is audio.

According to another aspect of the present invention, the given event includes at least one of incoming call, reception of short message, reception of multimedia message, calendar task reminder and alarm reminder.

According to another aspect of the present invention, the method further includes: presetting media or media playing genres corresponding to different frequencies of not processing the given event.

According to the embodiment of the present invention, the user can be effectively reminded of the unprocessed events.

Many aspects of the present invention can be understood better with reference to the following drawings. Element and features described in a drawing or an embodiment of the present invention can be combined with elements and features illustrated in one or more other drawings or embodiments. In addition, same or corresponding reference signs are used to represent same or corresponding constituent parts in all the drawings, and they also can be used to represent same or corresponding constituent parts in more than one embodiments. Primed reference signs (numerals) designate parts that are similar to parts that are designated by the same unprimed reference signs or the same reference signs with different prime indicators.

### Brief Description of the Drawings

The accompanying drawings constitute a part of the specification, illustrate the embodiments of the present invention and together with the description serve to explain the present invention. The drawings described as follows illustrate several exemplary embodiments of the present invention, and a person skilled in the art can obtain other drawings based on these drawings without paying any creative effort. In the drawings:
Fig. 1 is a schematic block diagram of a media playing apparatus according to an embodiment of the present invention;
Fig. 2 is a brief schematic block diagram of a media playing apparatus according to another embodiment of the present invention;
Fig. 3 is a brief schematic block diagram of a media playing apparatus according to another embodiment of the present invention;
Fig. 4 is a brief schematic block diagram of a media playing apparatus according to another embodiment of the present invention;
Fig. 5 is a brief schematic block diagram of a media playing apparatus according to another embodiment of the present invention;
Fig. 6 is a schematic block diagram of a media playing apparatus according to another embodiment of the present invention;
Fig. 7 is a brief schematic block diagram of a media playing apparatus according to another embodiment of the present invention;
Fig. 8 is a flowchart of a media processing method according to an embodiment of the present invention; and
Fig. 9 is a flowchart of a media processing method according to another embodiment of the present invention.

### Detailed Description of the Preferred Embodiments

The embodiments of the present invention will be described in detail as follows in conjunction with the accompanying drawings. In the following descriptions, the details are illustrated for the purpose of explanation instead of limitation, so as to help a complete understanding of the present invention. However, it will be apparent to a person skilled in the art that the present invention can be carried out in other embodiments deviating from these details.

In this specification, the exchangeable terms "electronic apparatus" and "electronic device" include all apparatuses having a media playing function such as mobile phone, notebook computer, desktop computer, PDA, MP3 player, MP4 player, etc.

In this application, the embodiments of the present invention are described mainly through electronic apparatuses in form of a mobile phone (e,g., cell phone). However, it will be appreciated that the present invention is not limited to the mobile phone, but relates to any appropriate type of apparatus having the media playing function. Hereinafter an electronic apparatus having the media playing function is called as a media playing apparatus, and components in the media playing apparatus, which can implement the media playing function, is called as a playing unit, media playing unit or media player.

To be noted, in order to avoid the present invention from being vague due to unnecessary details, the drawings only illustrate device structure and/or processing step closely associated with the solution of the present invention, and other details not so necessary to understand the present invention are omitted.

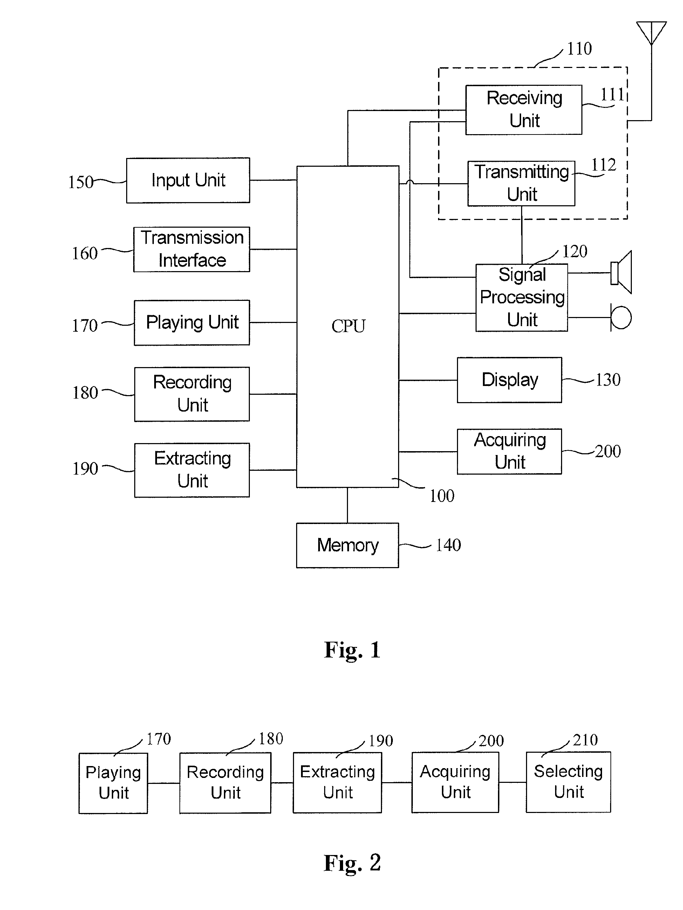

Fig. 1 illustrates an exemplary structural block diagram of a media playing apparatus 10 (e.g., a mobile phone) according to an embodiment of the present invention. As illustrated in Fig. 1, the media playing apparatus (e.g., mobile phone) 10 includes: a Central Processing Unit (CPU, also called as microprocessor or processor) 100, a Radio Frequency (RF) unit 110, a signal processing unit 120, a display 130, a memory 140, an input unit 150, a data transmission interface 160, a playing unit 170, a recording unit 180, an extracting unit 190 and an acquiring unit 200.

The various functions, operations and steps that are described herein may be controlled and/or carried out by the processor and/or various components that are described below with respect to the several exemplary embodiments of media playing apparatus 10, etc. Appropriate computer program logic, program code, and so on may be contained in a nontransitory memory 140 for operating and/or controlling the processor 100 and/or the other components, circuitry, etc. of the media playing apparatus, e.g., in accordance with the exemplary embodiments described herein.

The RF unit 110 is configured to receive and transmit data via a wireless network through an antenna 110a to realize wireless communications with other apparatuses, such as voice call, message (short message, multimedia message, etc.) reception and transmission and/or Internet access. The RF unit 110 may include at least one receiving unit 111 and a transmitting unit 112 for receiving and transmitting data respectively.

The signal processing unit 120 is configured to decode a voice signal received by the receiving unit 111, converts it into an analog signal and outputs through a speaker 121; in addition, the signal processing unit 120 is further configured to convert an analog signal inputted from a microphone 122 into a digital signal, apply a voice coding thereto, and transmit through the transmitting unit 112.

The display 130 is configured to display objects such as image and text. The display 130 for example may be, but need not be limited to, an LCD.

The input unit 150 is configured to input signals. The input unit 150 for example may be a keypad and/or touch screen or some other input device, e.g., a computer.

The data transmission interface 160 is configured to perform a data transmission with external devices.

The playing unit (also sometimes referred to as media playing unit, media player or player) 170 is configured to play media files, which contain file tags. A file tag can be easily provided in either an audio file (also sometimes called a music file) or a video file. For example, when the media file is a music file, the tag type of the file tag may include at least one of title, artist (such as author, composer, singer and/or executants (e.g., a performer, musician, and so on)), album, genre, lyrics and production year, etc. With respect to the format of the tag, as an example, when the music file has a MP3 format, the file tag may be of ID3 or APE format; and when the music file has an APE or MPC format, the file tag may be of APE format. Music files of other formats may have corresponding file tags of appropriate formats. When the media file is a video file (e.g., video file recording a concert or vocal concert), the file tag may be arranged to include types such as title, artist (such as singer/executant), concert time, etc. When the media file is a video file such as movie or documentary, the file tag may be arranged to includes types such as title, genre, director and/or producer, etc., wherein the tag of genre type for example may include "kungfu movie", "affectional (e.g., romantic) movie" or "ethical movie", etc. In the prior art, many video files have file tags.

In the embodiments of the present invention, the recording unit 180 is configured to record play events of media files by the playing unit 170. For example, the recording unit 180 may record play events of media files by the playing unit 170 in a predetermined time. The predetermined time may be default time, e.g., one week, one month, etc., or any time set by the user, e.g., two weeks, half a year, etc. For example, the play events of the media files can be recorded as play logs of the media files. The play logs of the media files may include information such as start time of each play of the media files.

The extracting unit 190 is configured to extract the tags in the media files played by the playing unit 170. For example, the extracting unit 190 may extract at least one type of tags from the media files.

As an example, a music file named as "001" has four types of tags therein, e.g., title, singer, album and genre. The extracting unit 190 may extract a part of or all types of tags from the four types of tags, e.g., just extract the tag of "title" type.

As another example, a music file named as "002" has three types of tags therein, e.g., title, singer and genre. The extracting unit 190 may extract a part of or all types of tags from the three types of tags, e.g., just extract the tag of "title" type.

The acquiring unit 200 is configured to acquire a media file playing frequency or a media file amount corresponding to each tag of a predetermined tag type among the tags extracted by the extracting unit 190, according to the play events recorded by the recording unit 180.

In one example, there is such play events that user A of a media playing apparatus listens to five songs in the recent week, the file names are "001"~"005", respectively, and the contents of the tags of "title" type in the files are "Song A" ~ "Song E", respectively. In this example, the recording unit 180 records the play events of "Song A" ~ "Song E" in the recent week, the extracting unit 190 extracts the tags of "title" type in the played files, then the acquiring unit 200 acquires the media file playing frequency corresponding to each tag of "title" type extracted by the extracting unit 190 according to the play events recorded by the recording unit 180. Each tag of "title" type and the media file playing frequency corresponding to each tag acquired by the acquiring unit 200 may be stored as play state information in the memory 140 of the media playing apparatus.

Table 1 shows each tag (i.e., each title) among each of tags of "title" type and corresponding media file playing frequency in one week.

**Table 1. Media File Playing Frequency Corresponding to Each Title**

| Title | Playing frequency in one week |
|---|---|
| Song A | 18 frequency |
| Song B | 6 frequency |
| Song C | 5 frequency |
| Song D | 3 frequency |
| Song E | 1 time |

It can be seen clearly from Table 1 that Song A is the user's most favorite song, and the second is Song B.

When each of the files "001"~"005" contains the tag of "genre" type, and the tag of "genre" type (sometimes referred to as genre) in each of the files indicates Jazz, Jazz, Rock, Jazz and Pop respectively, then the extracting unit 190 may extract the tags of "genre" type from the files, and the acquiring unit 200 may acquire the media file playing frequency or the media file amount corresponding to the tags of "genre" type (e.g., different genres) according to the play events.

Table 2 shows the media file playing frequency corresponding to each of tags of "genre" type (each genre) in one week.

**Table 2. Media File Playing Frequency Corresponding to Each Genre in One Week**

| Genre | Playing frequency in one week |
|---|---|
| Jazz | 27 frequency |
| Rock | 5 frequency |
| Pop | 1 time |

It can be seen clearly from Table 2 that Jazz is the user's most favorite music, and the second is Rock.

Table 3 shows the media file amount corresponding to each of tags of "genre" type (each genre) in one week.

**Table 3. Media File Amount Corresponding to Each Genre in One Week**

| Genre | Amount of songs of each genre played in one week |
|---|---|
| Jazz | 3 songs |
| Rock | 1 song |
| Pop | 1 song |

It can be seen clearly from Table 3 that Jazz is the user's most favorite music.

When the extracting unit 190 extracts Multiple types of tags (e.g., title, singer and genre) from a media file, the acquiring unit 200 may just calculate the media playing frequency or media file amount corresponding to each tag of a certain tag type (e.g., "genre" type) among the extracted tags of various types, according to the play events recorded by the recording unit 180. At that time, information such as the tags of each media file extracted by the extracting unit 190, as well as the media playing frequency or media file amount corresponding to each tag of a predetermined tag type acquired by the acquiring unit 200, is stored as play state information in the memory 140 of the media playing apparatus 10. The play state information may be generated by an information generating unit (not shown) based on the information extracted by the extracting unit 190 and the information acquired by the acquiring unit 200.

For example, Table 4 shows Example 1 of play state information containing multiple types of tags in one week. In Table 4, the play state information further contains the media file playing frequency corresponding to each of tags of "title" type acquired by the acquiring unit 200.

**Table 4. Example 1 of Play State Information Containing Multiple Types of Tags**

| Title | Playing frequency in one week | Artist/Singer | Album | Genre |
|---|---|---|---|---|
| Song A | 18 frequency | Bob | AA | Jazz |
| Song B | 6 frequency | Bob | AA | Jazz |
| Song C | 5 frequency | Rose | CC | Rock |
| Song D | 3 frequency | John | DD | Jazz |
| Song E | 1 time | Sarah | EE | Pop |
| ...... | ...... | ...... | ...... | ...... |

It can be seen clearly from Table 4 that Song A is the user's most favorite song, and the second is Song B,

Table 5 shows Example 2 of play state information containing multiple types of tags in one week. Table 5 further contains the media file playing frequency corresponding to each of tags of "artist/singer" type (i.e., different artists/singers) acquired by the acquiring unit 200.

**Table 5. Example 2 of Play State Information Containing Multiple Types of Tags**

| Artist/Singer | Playing frequency in one week | Title | Album | Genre |
|---|---|---|---|---|
| Bob | 24 frequency | Sone A | AA | Jazz |
| | | Song B | AA | Jazz |
| Rose | 5 frequency | Song C | CC | Rock |
| John | 3 frequency | Song D | DD | Jazz |
| Sarah | 1 time | Song E | EE | Pop |
| ...... | ...... | ...... | ...... | ...... |

It can be seen clearly from Table 5 that Bob is the user's most favorite singer, and the second is Rose.

Table 6 shows Example 3 of play state information containing multiple types of tags in one week. Table 6 further contains the media file amount corresponding to each of tags of "artist/singer" type (i.e., different artists/singers) acquired by the acquiring unit 200.

**Table 6. Example 3 of Play State Information Containing Multiple Types of Tags**

| Artist/Singer | Amount of songs of each singer played in one week | Title | Album | Genre |
|---|---|---|---|---|
| Bob | 2 songs | Song A | AA | Jazz |
| | | Song B | AA | Jazz |
| Rose | 1 song | Song C | CC | Rock |
| John | 1 song | Song D | DD | Jazz |
| Sarah | 1 song | Song E | EE | Pop |
| ...... | ...... | ...... | ...... | ...... |

It can be seen clearly from Table 6 that Bob is the user's most favorite singer.

Table 7 shows Example 4 of play state information containing multiple types of tags. Table 7 further contains the media file playing frequency corresponding to each of tags of "genre" type (i.e., different genres) acquired by the acquiring unit 200.

**Table 7. Example 4 of Play State Information Containing Multiple Types of Tags**

| Genre | Playing frequency in one week | Artist/Singer | Title | Album |
|---|---|---|---|---|
| Jazz | 27 frequency | Bob | Song A | AA |
| | | Bob | Song B | AA |
| | | John | Song D | DD |
| Rock | 5 frequency | Rose | Song C | CC |
| Pop | 1 time | Sarah | Song E | EE |
| ...... | ...... | ...... | ...... | ...... |

It can be seen clearly from Table 7 that Jazz is the user's most favorite music, and the second is Rock.

Table 8 shows Example 5 of play state information containing multiple types of tags. Table 8 further contains the media file amount corresponding to each of tags of "genre" type (i.e., different genres) acquired by the acquiring unit 200.

**Table 8. Example 5 of Play State Information Containing Multiple Types of Tags**

| Genre | Amount of files of each genre played in one week | Artist/Singer | Title | Album |
|---|---|---|---|---|
| Jazz | 3 songs | Bob | Song A | AA |
| | | Bob | Song B | AA |
| | | John | Song D | DD |
| Rock | 1 song | Rose | Song C | CC |
| Pop | 1 song | Sarah | Song E | EE |
| ...... | ...... | ...... | ...... | ...... |

It can be seen clearly from Table 8 that Jazz is the user's most favorite music.

The above Tables 1~8 are just examples, and the acquiring unit 200 may also acquire a media file playing frequency or media file amount corresponding to each tag of other tag types based on the tag type. In addition, the acquiring unit 200 may acquire a media file playing frequency or media file amount corresponding to each tag of each tag type, based on two or more tag types among the extracted tags. For example, playing frequencies or amounts of songs belonging to different "artists" and "albums" can be acquired based on tag types "artist" and "album", and generate play state information, which can be easily realized by a person skilled in the art after reading above examples.

Based on the media file playing frequency or media file amount corresponding to each tag of the predetermined tag type acquired by the acquiring unit 200, the user can be clearly acquainted with his favorite music or other media, which helps the user to acquire media files or other information which is more suitable.

In the media playing apparatus 10 as illustrated in Fig. 1, the playing unit 170, the recording unit 180, the extracting unit 190 and the acquiring unit 200 are arranged separately. As another example of the present invention, e.g., as is illustrated in Fig. 1 and also in several of the subsequent figures, the recording unit 180, the extracting unit 190 and the acquiring unit 200 may be integrated with the playing unit 170 to serve as a new playing unit (player) different from the prior art.

To be noted, the media playing apparatus 10 of the present invention is not limited to the structure as illustrated in Fig. 1, and other structures may also be included. In addition, some parts in Fig. 1 are also not necessary for the present invention and may be reasonably added or omitted.

Fig. 2 illustrates an exemplary structure of a media playing apparatus 10' according to another embodiment of the present invention. Fig. 2 omits many structural details not so related to the present invention, and just illustrates a structure closely related to the present invention. In Fig. 2, the media playing apparatus 10' not only includes the playing unit 170, the recording unit 180, the extracting unit 190 and the acquiring unit 200, but also includes a selecting unit 210.

The selecting unit 210 is configured to rank the tags, according to a descending order of the media playing frequency or media file amount corresponding to each tag of a predetermined tag type, so as to obtain a tag sequence, and select at least one type of tag from the start of the tag sequence. The selected at least one type of tag may be taken as favorite tag, and the played media files corresponding to the favorite tag may be taken as favorite media files.

For example, the selecting unit 210 may select Song A and Song B in Table 1 which have playing frequency not less than 6 as the favorite media files, or select songs (Song A and Song B) in Table 1 whose playing frequency rank top 2 as the favorite media files. For another example, the selecting unit 210 may select the tag (Jazz) corresponding to the maximum file amount in Table 8 as the user's favorite tag.

In case the acquiring unit 200 acquires the media file playing frequency or media file amounts corresponding to respective tags of more than two tag types, the selecting unit 210 ranks the tags of each tag type according to a descending order of the media playing frequency or media file amount corresponding to each tag of the type, so as to obtain a tag sequence, and select at least one type of tag from the tag sequence as the favorite tag. The intersection or union of the favorite tags among the tags of more than two types can be taken as the favorite media files. For example, when it is determined that "Bob" and "Jazz" are user's favorite tags among singer type tags and genre type tags, respectively, according to the result of media play events within one week, the user may select songs of Jazz genre sung by Bob as favorite songs, or take all songs (including Jazz genre or non-Jazz genre) sung by Bob as favorite songs.

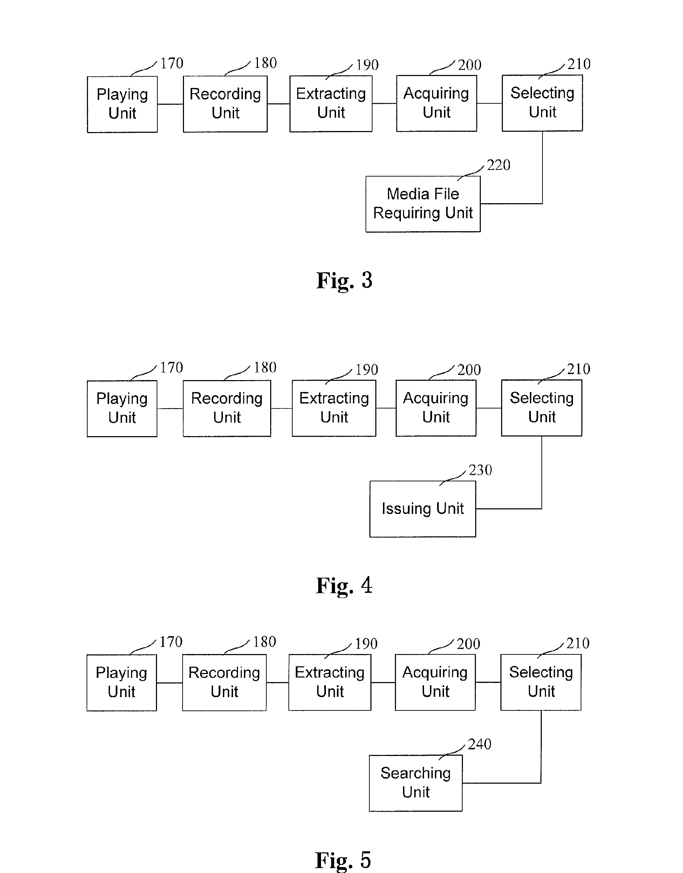

The user may acquire more favorite media by using the favorite tags. In another embodiment of the present invention, as illustrated in Fig. 3, the playing apparatus 10" further includes a media file requiring unit 220 configured to transmit the selected tag (favorite tag) to a server (not shown), so as to require media files having the selected tag from the server. For Example, transmissions to and/or from the server may be wireless transmissions via the radio 110 and the antenna 110a and/or may be via wired connection, e.g., directly to the server, or via a connection or transmission made through the internet or by some other network or other connection mechanism, and so on.

The media file requiring unit 220 may transmit, via a network (not shown), a request containing favorite tag (e.g., artist, genre and/or album) to a web server that provides media files, so as to acquire media files having the favorite tag from the server. For example, in case the user's favorite tag is album "AA", when the playing unit plays a certain song in album "AA", the media file requiring unit 220 may judge that album AA to which the song belongs is the user's favorite album according to a selection result of the selecting unit 210, so as to transmit a message requiring all songs in album AA to a predetermined web server, and receive the returned result. When it is expected to request songs of album AA other than those that exist locally from the predetermined web server, the media file requiring unit 220 may provide extracted titles in album AA to the predetermined website while transmitting the request, so as to indicate that only the files of titles other than the extracted titles are required from album AA.

In another embodiment of the present invention, as illustrated in Fig. 4, the media playing apparatus 10"' further includes an issuing unit 230 configured to transmit the selected tag (favorite tag) and/or a title of played media file (title of favorite media file) corresponding to the selected tag to a destination address. For example, the issuing unit 230 may transmit the favorite tag (or title of the favorite media file) to a friends-making website. Thus, the friends-making website may match different user's favorite tags or titles of favorite media files, and return to the user a list of friends having the same music hobby as the user, based on a matching result. For another example, when the media playing apparatus of the present invention is a mobile phone, the user of the mobile phone can automatically or manually transmit the favorite tag (or title of the favorite media file) to a specific number through multimedia message or short message, so as to require information of users having the same music hobby, and get acquainted with those "like-minded" friends more easily.

In another embodiment of the present invention, as illustrated in Fig. 5, the media playing apparatus 10^{iv} may further include a searching unit 240 configured to introduce the selected tag (favorite tag) into a search engine, so as to search media files having the selected tag. For example, a field "Bob and Jazz" may be introduced into a certain search engine, so as to search all media files having tags of "Bob" and "Jazz" and store a searching result. Other conditions (e.g., extracted title) may also be added to the searching field to exclude locally available songs.

The above media playing apparatus can supply more suitable information to the user, so as to provide better experiences to the user.

In another embodiment of the present invention, when the media playing apparatus is a mobile phone or other electronic apparatus having a function of playing an event prompting tone, it may be further configured to change the playing genre of the prompting tone of the event according to the urgent degree of the unprocessed event, so as to remind the user to process the unprocessed event more efficiently.

Different music genres can represent different emotional expressions, wherein some are gentle and some are strong. With respect to a new event occurring in the mobile phone, a media of audio type (e.g., song) may be used as the prompting sound (i.e., tone), and songs of different genres can be used to represent different urgent degrees of the event according to the embodiment of the present invention. For example, when the mobile phone receives a call from friend A, a gentle light music may be used as the prompting tone for the first time; under a noisy environment, the prompting tone may not be heard and the call cannot be answered; when the call is not processed, i.e., not answered or refused, and friend A calls again, the music genre may be changed as stronger Soft Rock, and the sound is louder; and when the second call is still not processed and friend A calls for the third time, the mobile phone may set the prompting tone as shocking music such as heavy metal. Similarly, with respect to multiple unprocessed short messages, calendar reminder and alarm reminder, step-by-step progressive reminders can be realized through the above mechanism.

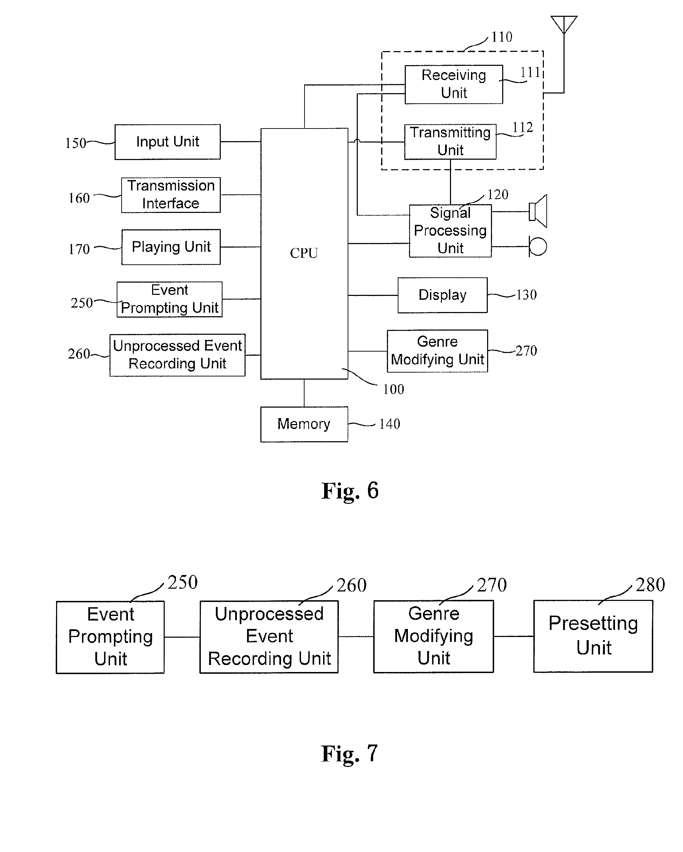

In order to realize the above function, in one embodiment of the present invention, when the media playing apparatus 10^{v} is a mobile phone or other electronic apparatus having a function of playing the event prompting tone as illustrated in Fig. 6, it may further include an event prompting unit 250, an unprocessed event recording unit 260 and a tone genre modifying unit 270.

The event prompting unit 250 in the media playing apparatus 10^{v}is configured to monitor a given event, and prompt the given event by playing a media through the playing unit 170. For example, the event prompting unit 250 can detect an incoming call event, and when a new incoming call event is detected, the incoming call event can be prompted by playing a media through the playing unit. The format of the media played for prompting the given event is, for example, audio format.

The unprocessed event recording unit 260 is configured to record the frequency of continuously not processing a given event. The frequency of not processing the given event may correspond to the urgent degree of the given event. The given event, for example, may include, but not be limited to, incoming call, reception of short message, reception of multimedia message, calendar task reminder and/or alarm reminder. As an example, incoming call events from different calling parties can be regarded as different events according to the calling parties' numbers, or events having different prompting tones can be regarded as different events according to the settings of the prompting tones, and the unprocessed frequency of each event can be recorded, and the invention is not limited thereby. With respect to the events of reception of short messages or multimedia messages, the events of reception of short messages/multimedia messages from different senders can be regarded as different events according to the numbers of the messages/multimedia messages senders, or all the events of reception of short message or multimedia message can be regarded as the same events, and the unprocessed frequency of each event can be recorded.

The genre modifying unit 270 is configured to modify a media played for prompting the given event of a next time into a media having a different playing genre, based on the frequency recorded by the unprocessed event recording unit 260. For example, the genre modifying unit 270 may modify an audio song (e.g., Song A) prompting the given event of a next time into a different song (e.g., Song C) having a different playing genre stored in the media playing apparatus, or just modify the genre of the song prompting the given event of a next time without modifying the song per se, for example, modifying the Jazz genre of song A into Rock genre.

For the convenience of the genre modifying unit 270 to modify the event prompting tone, in another embodiment of the present invention as illustrated in Fig. 7, the media playing unit may be further provided with a prompt presetting unit 280 configured to preset media or media playing genres corresponding to different frequencies of not processing the given event.

The preset parameters provided or determined by the presetting may be determined at the factory or at some other place during manufacturing the playing apparatus; or it may be provided or determined by the user of the apparatus or may be otherwise provided or determined.

Since the event prompting tone can be changed according to the frequency of not processing the event in the embodiments of the present invention, more effective event reminders can be realized.

To be noted, the event prompting unit 250, the unprocessed event recording unit 260, the genre modifying unit 270 and the presetting unit 280 can be arranged not only in the current media playing apparatus, but also in the media playing apparatus together with the playing unit 170, the recording unit 180, the extracting unit 190 and the acquiring unit 200. For example, the event prompting unit 250, the unprocessed event recording unit 260, the genre modifying unit 270 and the presetting unit 280 can be arranged in the media playing apparatus as illustrated in Figs. 1~6.

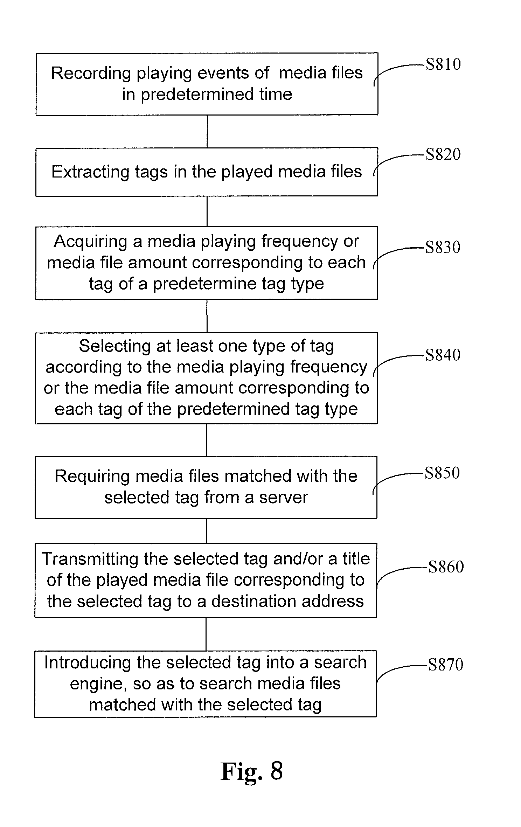

The media processing method in the embodiment of the present invention is described as follows in conjunction with the previous descriptions. As illustrated in Fig. 8, the method includes the following steps:
Step S810: recording playing events of a media file while playing the media file containing file tags.
Step S820: extracting the tags in the played media file. For example, tags of "singer" and "album" types can be extracted from the files played in one week.
Step S830: acquiring a media playing frequency or media file amount corresponding to each tag of a predetermine tag type among the extracted tags according to the recorded play events. For example, the media playing frequency or media file amount corresponding to each tag of "album" type among the extracted tags of "singer" and "album" types can be acquired according to the play events.

The user can conveniently acquire more media files or other information by using the media playing frequency or media file amount corresponding to each tag.

In another embodiment of the present invention, the method further comprises Step S840: ranking respective tags, according to a descending order of the media playing frequency or the media file amount corresponding to each tag of a predetermined tag type, so as to obtain a tag sequence, and selecting at least one type of tag from the start of the tag sequence as favorite tag. For example, album AA can be selected as a favorite album.

In another embodiment of the present invention, the method further includes: Step S850: transmitting the selected tag (favorite tag) to a server, so as to acquire media files having the selected tag from the server. For example, in case the user's favorite tag is album "AA", a request requiring all songs in album AA may be transmitted to a predetermined web server.

In another embodiment of the present invention, the method further includes: Step S860: transmitting the selected tag and/or a title of a played media file (title of favorite media file) corresponding to the selected tag, to a destination address. For example, the favorite tag or the title of the favorite media file may be transmitted to a specific number through the multimedia message or short message.

In another embodiment of the present invention, the method further includes: Step S870: introducing the selected tag into a search engine, so as to search media files having the selected tag. For example, a field "Bob and Jazz" may be introduced into a certain search engine, so as to search all media files having tags of "Bob" and "Jazz".

To be noted, although the above steps are described orderly, it will be appreciated that the orders of the above steps are not fixed, wherein the orders of some steps can be adjusted and some steps can be carried out concurrently. For example, the orders of steps S850~S870 can be adjusted randomly, or those steps can be carried out concurrently. In addition, other steps may be intervened between some of the above steps. But such amendment will not influence the implementation of the present invention and is within the scope of the present invention.

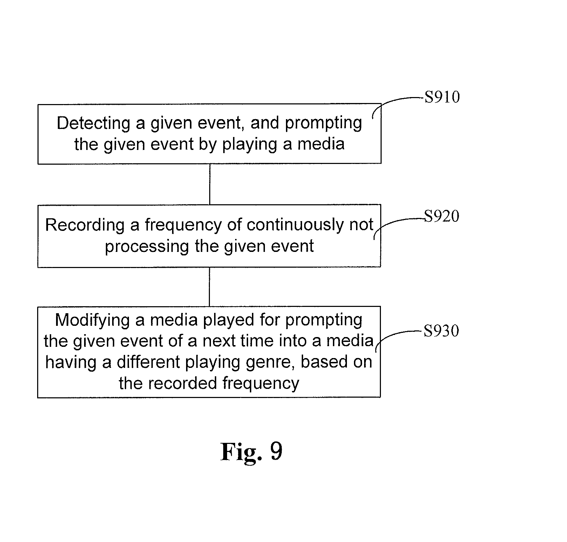

In another embodiment of the present invention, as illustrated in Fig. 9, when the media playing apparatus has a function of prompting the given event, the media processing method includes the following steps:
Step S910: monitoring a given event, and prompting the given event by playing a media. For example, when an incoming call event occurs, the incoming call event can be prompted by playing a media of audio format. The given event for example may include at least one of incoming call, reception of short message, reception of multimedia message, calendar task reminder and alarm reminder.
Step S920: recording a frequency of continuously not processing the given event.
Step S930: modifying a media played for prompting the given event of a next time into a media having a different playing genre, based on the recorded frequency. For example, an audio song (e.g., Song A) prompting the given event of a next time may be modified into a different song (e.g., Song C) having a different playing genre, or just the genre of the song is modified without modifying the song per se, for example, modifying the Jazz genre of song A into Rock genre.

In the embodiment of the present invention, steps S910~S930 may be carried out independently, or carried out before and/or after any step in Fig. 8, or carried out concurrently with any step in Fig. 8.

In another embodiment of the present invention, the method may further include (not shown): presetting media or media playing genres corresponding to different frequencies of not processing the given event.

The method of the present invention is not limited to be executed according to the order as described herein, and can be executed in other order sequentially, concurrently or independently. Thus, the execution order of the method as described herein does not constitute a limitation to the technical scope of the present invention.

Features described and/or illustrated in one embodiment can be used in one or more other embodiments in a same or similar way, and/or combine with or replace features in other embodiments.

To be noted, the term "include/including/comprise/comprising" herein refers to existence of feature, component, step and assembly, not excluding existence or addition of one or more other features, components, steps and assemblies or a combination thereof.

The above description and accompanying drawings depict the various features of the invention. It will be appreciated that the appropriate computer code could be prepared by a person who has ordinary skill in the art to carry out the various steps and procedures described above and illustrated in the drawings. It also will be appreciated that the various terminal, computers, servers, networks and the like described above may be virtually any type and that the computer code may be prepared to carry out the invention using such apparatus in accordance with the disclosure hereof.

Any process, method description or block in the flowcharts or described in other ways can be understood as including one or more modules, segments or portions for implementing the codes of the executable instructions in the steps of a specific logic function or process, and the range of the preferred embodiments further includes other implementations, wherein the functions may be executed other than the order illustrated or discussed, including a substantial simultaneous manner based on concerned function or an inverse order, and this shall be appreciated by a person skilled in the art.

Any logic and/or step in the flowcharts or described in other ways, for example can be used for implementing ordered list of executable instruction of logic function, and can be embodied in any computer readable medium, so as to be used by instruction execution system, apparatus or device (e.g., computer-based system, system including processor, or other system that can be called from the instruction execution system, the apparatus or the device and then execute the instruction), or used in conjunction therewith. In the context, "computer readable medium" may be any apparatus that can include, store, communicate, propagate or transmit program to be used by an instruction execution system, apparatus or device, or used in conjunction therewith. The computer readable medium for example may be, but not limited to, electronic, magnetic, optical, electromagnetic, infrared or semiconductor system, apparatus, device or propagation medium. More detailed examples of the computer readable medium include (non-exhaustive list): electrical connection portion (electronic apparatus) having one or more wirings, portable computer disk (magnetic apparatus), random access memory (RAM) (electronic apparatus), read only memory (ROM) (electronic apparatus), Erasable Programmable Read Only Memory (EPROM or flash memory) (electronic apparatus), optical fiber (optical apparatus), and portable compact disc-read only memory (CDROM) (optical apparatus). Furthermore, a program can be electronically captured by optically scanning a paper sheet or other medium where the program is printed, then the program is compiled, interpreted, or processed upon demand in an appropriate way, next the program is stored in the computer memory, thus the computer readable medium even may be a paper sheet or other appropriate medium where the program is printed.

The embodiments of the present invention are disclosed herein. A person skilled in the art will easily realize that the present invention has other applications under other environments. In fact, many other embodiments and implementation are also possible. The accompanied claims do not intend to limit the scope of the present invention with the above embodiments. In addition, any reference to "means for/ means configured to ..."is intended to evoke a means-plus-function reading of an element and a claim, whereas, any elements that do not specifically use the recitation "means for", are not intended to be read as means-plus-function elements, even if the claim otherwise includes the word "means"

## Claims

1. A media playing apparatus comprising a playing unit that plays media files containing tags, wherein the media playing apparatus further comprises:
a recording unit that records play events of the media files by the playing unit;
an extracting unit that extracts the tags of the media files played by the playing unit; and
an acquiring unit that acquires a media file playing frequency or a media file amount corresponding to each tag of a predetermined tag type among the extracted tags according to the play events recorded by the recording unit.

2. The media playing apparatus according to claim 1, wherein the media files are music files, and the predetermined tag type comprises at least one of music title, author, composer, singer, executant, album, genre and production year.

3. The media playing apparatus according to either of claims 1 or 2, further comprising:
a selecting unit that ranks the tags, according to a descending order of the media file playing frequency or media file amount corresponding to each tag of the predetermined tag type, so as to obtain a tag sequence, and selects at least one type of tag from the start of the tag sequence.

4. The media playing apparatus according to any of claims 1-3, further comprising a media file requiring unit that transmits the selected tag to a server, so as to require media files having the selected tag from the server.

5. The media playing apparatus according to any of claims 1-4, further comprising a searching unit that introduces the selected tag into a search engine, so as to search media files having the selected tag.

6. The media playing apparatus according to any of claims 1-5, further comprising an issuing unit that transmits the selected tag and/or a title of a played media file corresponding to the selected tag, to a destination address.

7. The media playing apparatus according to any of claims 1-6, further comprising:
an event prompting unit that monitors a given event, and prompts the given event by playing a media through the playing unit;
an unprocessed event recording unit that records a frequency of continuously not processing the given event; and
a genre modifying unit that modifies a media played for prompting the given event of a next time into a media having a different playing genre, based on the frequency recorded by the unprocessed event recording unit.

8. The media playing apparatus according to any of claims 1-7, wherein the format of the media played for prompting the given event is audio.

9. The media playing apparatus according to any of daims 1-8, wherein the given event comprises at least one of incoming call, reception of short message, reception of multimedia message, calendar task reminder and alarm reminder.

10. The media playing apparatus according to any of claims 1-9, further comprising a presetting unit that presets media or media playing genres corresponding to different frequencies of not processing the given event.

11. A media processing method, comprising:
recording play events of media files when the media files containing file tags are played;
extracting the tags of the played media files; and
acquiring a media file playing frequency or a media file amount corresponding to each tag of a predetermined tag type among the extracted tags according to the recorded play events.

12. The method according to claim 11, further comprising:
ranking the tags, according to a descending order of the media file playing frequency or media file amount corresponding to each tag of the predetermined tag type, so as to obtain a tag sequence, and selecting at least one type of tag from the start of the tag sequence.

13. The method according to either of claims 11 or 12, further comprising:
transmitting the selected tag to a server, so as to require media files having the selected tag from the server; and
introducing the selected tag into a search engine, so as to search media files having the selected tag.

14. The method according to any of claims 11-13, further comprising:
monitoring a given event, and prompting the given event by playing a media;
recording a frequency of continuously not processing the given event; and
modifying a media played for prompting the given event of a next time into a media having a different playing genre based on the recorded frequency.

15. The method according to any of claims 11-14, further comprising:
presetting media or media playing genres corresponding to different frequencies of not processing the given event.
